# EUROPÄISCHE PATENTSCHRIFT

(11) **EP 0 952 044 B1**
(45) Veröffentlichungstag und Bekanntmachung des Hinweises auf die Patenterteilung: **30.07.2003**
(21) Anmeldenummer: 99106264.7
(22) Anmeldetag: 15.04.1999
(51) Int. Cl.: B60R 21/20

(54) **Gassack-Modul für ein Fahrzeuginsassen- Rückhaltesystem und Verfahren zu seiner Herstellung**
Airbag module for a vehicle passenger restraint system and method for producing the same
Module de coussin gonflable pour un dispositif de retenue de passager d'un véhicule et sa méthode de fabrication

(30) Priorität: 20.04.1998 DE 29807098 U
(43) Veröffentlichungstag der Anmeldung: 27.10.1999
(73) Patentinhaber: TRW Occupant Restraint Systems GmbH & Co. KG, 73551 Alfdorf (DE)
(72) Erfinder: Brucker, Roland, 73529 Schwäbisch-Gmünd (DE)
(74) Vertreter: Kitzhofer, Thomas, Dipl.-Ing.

(56) Entgegenhaltungen:
- DE-C- 19 700 759
- DE-U- 29 702 008
- DE-U- 29 718 205
- DE-U- 29 718 305

## Beschreibung

Die Erfindung betrifft ein Gassack-Modul für ein Fahrzeuginsassen-Rückhaltesystem, mit einem langgestreckten Gehäuse, das aus zwei Seitenteilen besteht und in welchem ein Strömungskanal für Druckgas vorgesehen ist, und einem Gassack, der mittels des Druckgases aus einer zusammengefalteten Stellung in eine entfaltete Stellung überführt werden kann und der im Gehäuse untergebracht ist.

Im entfalteten Zustand kann der Gassack eine Schutzwirkung für einen Fahrzeuginsassen bereitstellen, beispielsweise bei einem Unfall. Zu diesem Zweck ist das Gassack-Modul mit einem Gasgenerator verbunden, der von einer geeigneten Auslösesensorik aktiviert werden kann, wenn diese die Notwendigkeit erkennt, den Gassack in die entfaltete Stellung zu überführen.

In langgestreckten Gehäusen, die den Gassack umgeben, um ihn im gefalteten Zustand zu halten und ihn zu schützen, besteht grundsätzlich das Problem, das vom Gasgenerator bereitgestellte Druckgas gleichmäßig in den Gassack einzubringen. Üblicherweise wird als Strömungskanal eine Gaslanze verwendet, die mit dem Gasgenerator verbunden ist und sich durch das Gehäuse hindurch erstreckt. In der Gaslanze sind mehrere Ausströmöffnungen vorgesehen, die das Eintreten des Druckgases in den Gassack ermöglichen.

Die DE-U-29718205 zeigt einen Modul gemäß dem Oberbegriff des Anspruchs 1.

Die Verwendung von solchen Gaslanzen führt zu verschiedenen Nachteilen. Zum einen stellt die Gaslanze ein zusätzliches Teil dar, das hergestellt, gehandhabt und montiert werden muß. Hieraus ergeben sich erhöhte Kosten. Zusätzlich bereitet das Einbringen der Gaslanze in das Gehäuse und in den Gassack Probleme, da der Gassack unter keinen Umständen beim Einbringen der Gaslanze beschädigt werden darf.

Die Aufgabe der Erfindung besteht darin, ein Gassack-Modul der gattungsgemäßen Art zu schaffen, bei dem die Montage des Gassack-Moduls vereinfacht ist.

Zu diesem Zweck ist gemäß der Erfindung bei einem Gassack-Modul der gattungsgemäßen Art vorgesehen, daß der Strömungskanal von den Seitenteilen des Gehäuses, dem Deckel und einer einstückig mit dem ersten der beiden Seitenteile ausgeführten Verschlußplatte gebildet ist, wobei die Durchlässe in der Verschlußplatte aus gebildet sind. Bei dieser Gestaltung wird also der Strömungskanal nicht von der als separates Bauteil ausgeführten Gaslanze gebildet, sondern von Gestaltungen, die Teil des Gehäuses selbst sind. Auf diese Weise entfällt das Einbringen der Gaslanze in das Gehäuse.

Ein weiteres wichtiges Merkmal der Erfindung ist die einfache Herstellbarkeit des Gehäuses. Beim erfindungsgemäßen Gehäuse, das aus Kunststoff gespritzt oder gegossen wird, sind für das entstehende Spritz- oder Gießteil keine geschlossenen Profile (im Querschnitt gesehen) vorgesehen, die das Spritzen oder Gießen aufwendig machen. Da aber ein geschlossenes Profil zur Bildung des Strömungskanals vorgesehen sein soll, wird dieses durch Umbiegen des Spritz- oder Gießteils und anschließendes aneinander Befestigen der umgebogenen Abschnitte gebildet. Das Gehäuse kann sozusagen in einer Ebene gespritzt oder gegossen werden. Die Seitenteile bilden im wesentlichen eine Ebene, von der zum Beispiel nur die Verschlußplatte im wesentlichen senkrecht absteht. Durch das Umbiegen und das Befestigen des Seitenteils, an dem die Verschlußplatte nicht angebracht ist, an der Verschlußplatte ergibt sich das in Umfangsrichtung geschlossene Profil und damit ein Hohlkörper, welcher den Strömungskanal bildet.

Die Erfindung betrifft zudem ein Verfahren zum Herstellen eines erfindungsgemäßen Gassack-Moduls, welches durch seine einfache, kostengünstige Herstellung charakterisiert ist. Die folgenden Schritte sind hierzu vorgesehen:
a) das Gehäuse wird aus Kunststoff so gespritzt oder gegossen, daß keine geschlossenen Profile im hergestellten gespritzten oder gegossenen Teil vorgesehen sind,
b) der gefaltete Gassack wird in das offene Gehäuse eingelegt,
c) das Gehäuse wird an der dem Strömungs kanal abgewandten seite des Gassacks geschlossen, wobei durch das Schließen auch der Strömungskanal geschlossen wird, und
d) die durch das Schließen einander gegenüberliegenden Seitenteile werden miteinander so verbunden, daß sie auf konstantem Abstand gehalten sind.

Vorzugsweise wird durch das Schließen auch eine Kammer zur Unterbringung des Gassacks geschlossen.

Vorteilhafte Ausgestaltungen der Erfindung ergeben sich aus den Unteransprüchen.

Die Erfindung wird nachfolgend unter Bezugnahme auf verschiedene Ausführungsformen beschrieben, die in den beigefügten Zeichnungen dargestellt sind. In diesen zeigen:
- Fig. 1 in einer abgebrochenen und geschnittenen Perspektivansicht ein Gassack-Modul gemäß einer ersten Ausführungsform der Erfindung mit zusammengefaltetem Gassack;
- Fig. 2 das Gassack-Modul von Fig. 1 mit entfaltetem Gassack;
- Fig. 3 in einer abgebrochenen und geschnittenen Perspektivansicht ein geöffnetes Gehäuse, das beim Gassack-Modul von Fig. 1 verwendet wird;
- Fig. 4 in einer abgebrochenen und geschnittenen Perspektivansicht ein Gehäuses gemäß einer Variante, das bei dem Gassack-Modul von Fig. 1 verwendet werden kann;
- Fig. 5 in einer geschnittenen Perspektivansicht ein Gehäuse, das bei einer zweiten Ausführungsform des erfindungsgemäßen Gassack-Moduls verwendet werden kann;
- Fig. 6 in einer Schnittansicht eine Variante des in Fig. 5 gezeigten Gehäuses.

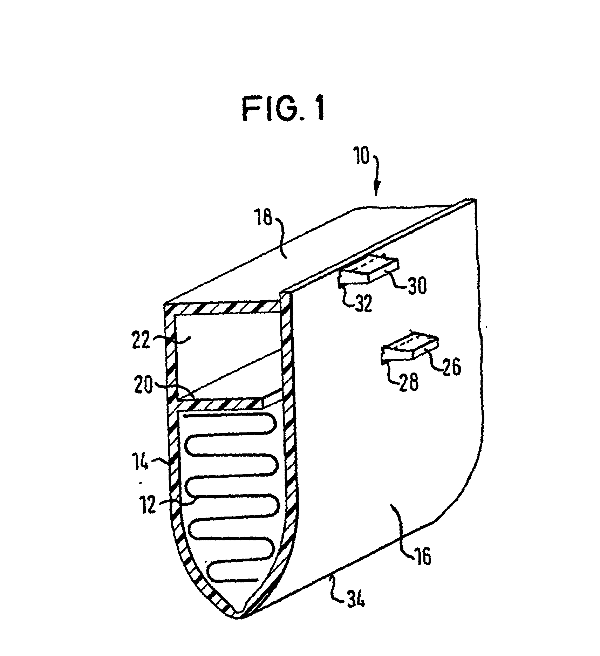

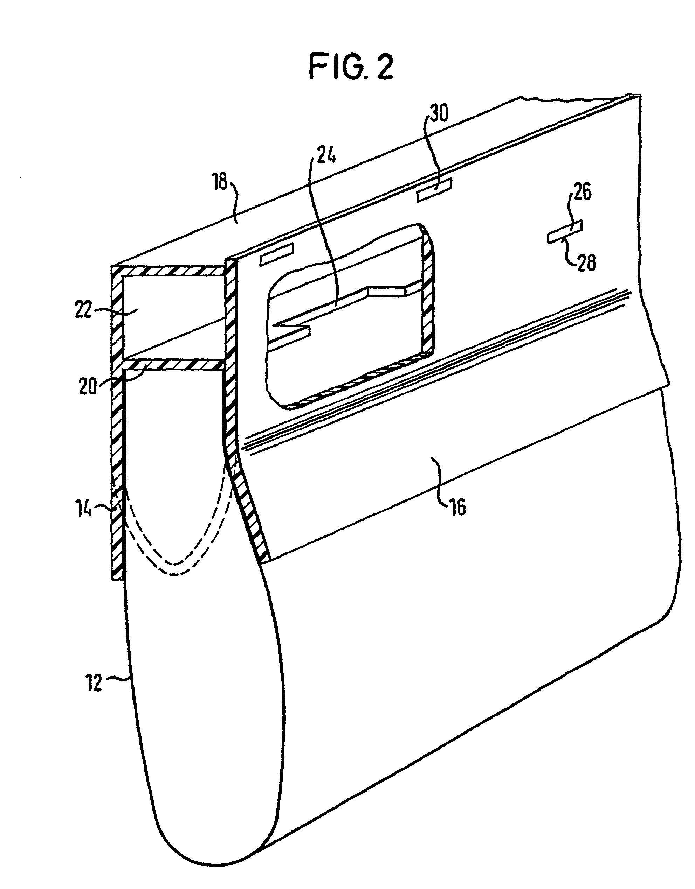

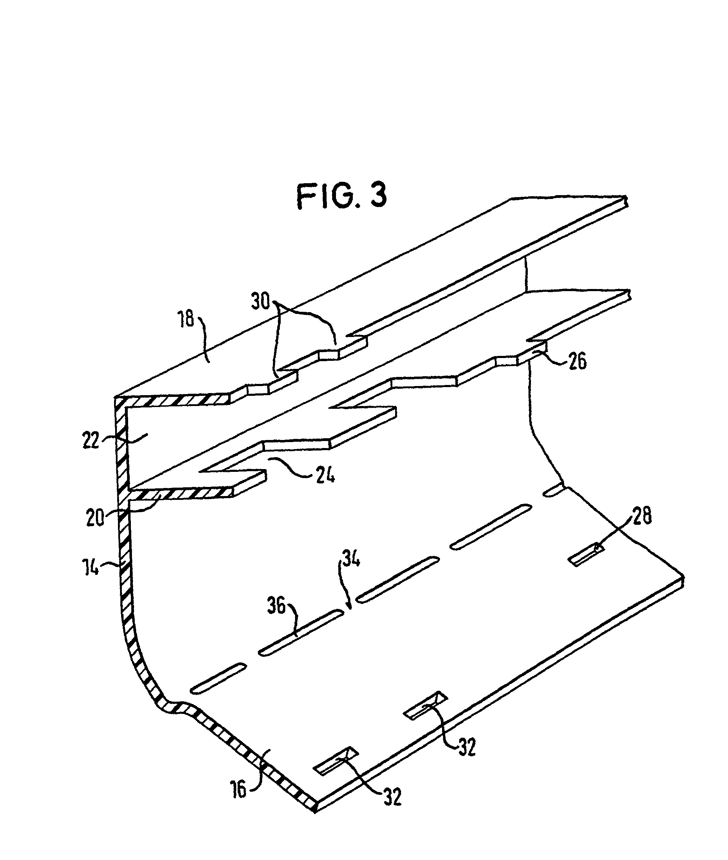

In Fig. 1 ist ein Gassack-Modul gemäß einer ersten Ausführungsform der Erfindung gezeigt. Das Gassack-Modul enthält ein Gehäuse 10, in welchem ein nur schematisch dargestellter Gassack 12 zusammengefaltet angeordnet ist und das den Gassack 12 im gefalteten Zustand vollständig umgibt. Das Gehäuse 10 enthält zwei Seitenteile 14, 16 sowie einen Deckel 18, der als Teil des Seitenteils 14 einstückig mit diesem ausgebildet ist (siehe auch Fig. 3). Das Seitenteil 14 ist ferner mit einer Verschlußplatte 20 versehen, das zusammen mit dem Deckel 18 und den beiden Seitenteilen 14, 16 einen Strömungskanal 22 für Druckgas abgrenzt, mittels dem der Gassack 12 aus der zusammengefalteten Stellung in die in Fig. 2 gezeigte entfaltete Stellung überführt werden kann. In der Verschlußplatte sind Durchlässe 24 (siehe Fig. 3) vorgesehen, die das Überströmen des Druckgases aus dem Strömungskanal 22 in den Gassack 12 ermöglichen. Der Gassack 12 ist in einer geschlossenen Kammer des Gehäuses 10 untergebracht, die durch die Seitenteile 14, 16 und die Verschlußplatte 20 begrenzt ist.

Die Verschlußplatte 20 ist mit Vorsprüngen 26 versehen, die in Öffnungen 28 eingreifen, die im Seitenteil 16 ausgebildet sind. Ferner ist der Deckel 18 mit Vorsprüngen 30 versehen, die in Öffnungen 32 eingreifen, die im Seitenteil 16 ausgebildet sind. Die Vorsprünge 26, 30 können mit dem Seitenteil 18 auf eine beliebige geeignete Weise verbunden sein, beispielsweise durch Verklipsen, Verschweißen, Vernieten, etc. Dadurch sind die beiden Seitenteile 14, 16 im Bereich des Strömungskanals 22 fest miteinander verbunden. In Figur 1 ist eine Clip-Verbindung angedeutet, in der die Vorsprünge 26, 30 hakenförmige Enden haben. Aus Gründen der Vereinfachung der Zeichnungen sind diese hakenförmigen Enden in den übrigen Figuren nicht mehr dargestellt.

Auf der vom Strömungskanal 22 abgewandten Seite des Gassacks 12 sind die beiden Seitenteile 14, 16 einstückig miteinander verbunden. Zu diesem Zweck ist eine Biegelinie 34 vorgesehen, die gebildet ist durch eine Vielzahl von Materialschwächungen 36. Diese Materialschwächungen 36 definieren eine Reißlinie, entlang der die beiden Seitenteile 14, 16 voneinander getrennt werden können, um das Entfalten des Gassacks zu ermöglichen. Dieser Zustand des Gassack-Moduls mit entfaltetem Gassack 12 und voneinander getrennten Seitenteilen 14, 16 ist in Fig. 2 zu sehen.

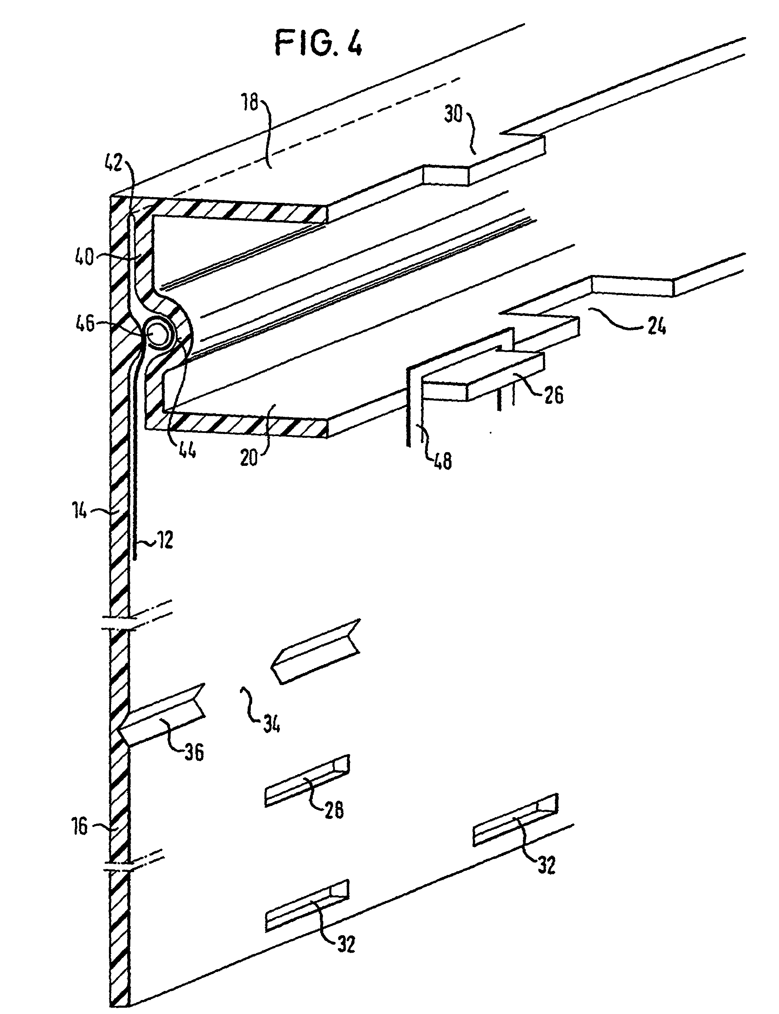

In Fig. 4 ist eine Variante des Gehäuses für ein Gassack-Modul gemäß der ersten Ausführungsform gezeigt. Bei dieser Variante ist eine Fixierungsplatte 40 vorgesehen, die entlang einer Biegelinie 42 einstückig mit dem Seitenteil 14 verbunden ist. Die Fixierungsplatte weist eine Nut 44 auf, in der ein Wulst 46 aufgenommen ist, der entlang der Berandung des Gassacks 12 vorgesehen ist. Der Gassack 12 ist ferner mit Laschen 48 versehen, die über die Vorsprünge 26 der Verschlußplatte 20 gehängt werden.

Anhand der Variante von Fig. 4 ist zu ersehen, daß das Gehäuse 10 besonders einfach hergestellt werden kann, beispielsweise als Spritzguß-Kunststoffteil. Die beiden einstückig miteinander verbundenen Seitenteile 14, 16 können zusammen mit der Fixierungsplatte 40, der an dem freien Rand der Fixierungsplatte 40 angebrachten Verschlußplatte 20 sowie dem Deckel 18, der im Bereich der Biegelinie 42 mit der Fixierungsplatte 40 verbunden ist, einstückig hergestellt werden. Zu diesem Zweck wird die Fixierungsplatte 40 in einer Stellung spritzgegossen, in der das Gehäuse mittels einer möglichst einfachen Spritzgußform hergestellt werden kann, ohne daß umfangsmäßig geschlossene Hohlprofile gespritzt werden müssen. Insbesondere kann das Gehäuse in einer Gestalt hergestellt werden, in der sich die Fixierungsplatte 40 in der Verlängerung der beiden Seitenteile 14, 16 befindet. Abgesehen von dem Deckel 18 und der Verschlußplatte 20 ist das Gehäuse in diesem Zustand eben. Anschließend wird die Fixierungsplatte 40 zusammen mit dem Deckel 18 und der Verschlußplatte 20 entlang der Biegelinie 42 umgebogen, wobei die dabei umgebogenen Abschnitte des jetzt nur als gegossenes oder gespritztes Rohteil vorliegenden Gehäuses die Seitenteile 14, 16 sind. Das Gehäuse erthält nun die in Fig. 4 gezeigte Gestalt. Gleichzeitig wird der Wulst 46 des Gassacks 12 in die Nut 44 eingelegt, und die Laschen 48 des Gassacks 12 werden über die Vorsprünge 26 gehängt. Anschließend wird das Seitenteil 16 des Gassacks entlang der Biegelinie 34 umgebogen, so daß die Vorsprünge 26, 30 in die Öffnungen 28, 32 eingreifen. Wenn dann die Vorsprünge 26, 30 mit dem Seitenteil 16 fest verbunden sind, ist ein allseitig geschlossenes Gassack-Modul geschaffen, bei dem keine Abdeckung erforderlich ist, die das Gehäuse gegenüber dem Außenraum schützt und den Gassack im Gehäuse hält.

Der Deckel 18 und die Verschlußplatte 20 halten die Seitenteile 14, 16 auf konstantem Abstand und verbinden sie. Beim Umbiegen des gespritzten oder gegossenen Rohteils werden die Kammer zur Unterbringung des Gassacks 12 und der Strömungskanal 22 geschlossen.

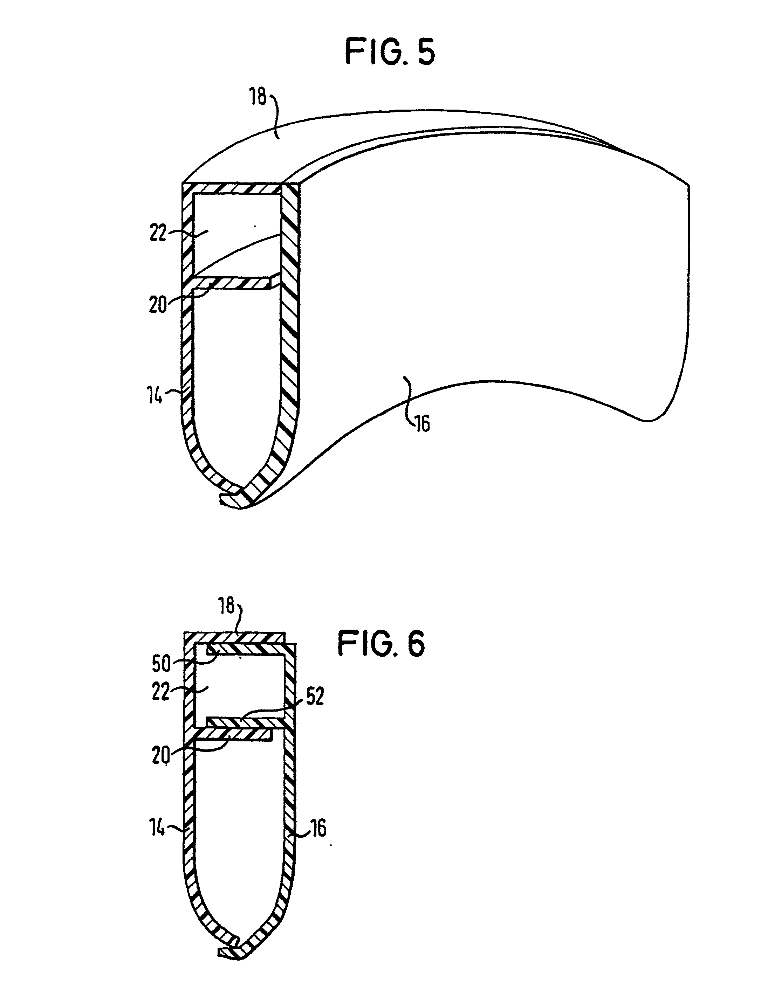

In Fig. 5 ist ein Gehäuse für ein Gassack-Modul gemäß einer zweiten Ausführungsform der Erfindung gezeigt. Im Gegensatz zur ersten Ausführungsform sind die beiden Seitenteile 14, 16 hier als separate Teile ausgeführt, wobei der Deckel 18 und die Verschlußplatte 20 einstückig mit dem Seitenteil 14 ausgebildet sind. Das Seitenteil 16 wird auch bei dieser Ausführungsform mit dem Deckel 18 und der Verschlußplatte 20 verbunden, beispielsweise mittels der von der ersten Ausführungsform bekannten Vorsprünge und Öffnungen, die in Fig. 5 jedoch nicht gezeigt sind. An der vom Strömungskanal 22 abgewandten Seite des Gehäuses sind die beiden Seitenteile 14, 16 mittels einer Rastverbindung aneinander befestigt. Diese Rastverbindung wird bei Aktivierung des Gassacks gelöst, so daß dieser sich entfalten kann.

In Fig. 6 ist eine Variante des in Fig. 5 gezeigten Gehäuses dargestellt. Auch bei dieser Variante sind der Deckel 18 und die Verschlußplatte 20 einstückig mit dem Seitenteil 14 ausgeführt. Zusätzlich sind aber am Seitenteil 16 Verstärkungselemente 50, 52 ausgebildet, die am Deckel 18 beziehungsweise der Verschlußplatte 20 anliegen und den Strömungskanal 22 verstärken. Die Verstärkungselemente 50, 52 können insbesondere plattenförmig sein, wobei das Verstärkungselement 52 so ausgeführt ist, daß die Durchlässe 24 nicht verschlossen werden, die ein Überströmen des Druckgases aus dem Strömungskanal 22 in den Gassack 12 ermöglichen.

Bei der Ausführungsform gemäß den Figuren 5 und 6 können die beiden Seitenteile 14, 16 aus unterschiedlichen Materialien bestehen, so daß eine Anpassung an die unterschiedlichen Belastungen des Gassack-Moduls möglich ist.

## Patentansprüche

1. Gassack-Modul für ein Fahrzeuginsassen-Rückhaltesystem, mit einem langgestreckten Gehäuse (10), das aus zwei mittels eines Deckels (18) miteinander verbundenen Seitenteilen (14, 16) besteht und in welchem ein Strömungskanal (22) mit Durchlässen (24) für Druckgas vorgesehen ist, und einem Gassack (12), der mittels des Druckgases aus einer zusammengefalteten Stellung in eine entfaltete Stellung überführt werden kann und der im Gehäuse (10) untergebracht ist,
**dadurch gekennzeichnet, daß** der Strömungskanal (22) von den Seitenteilen (14, 16) des Gehäuses (10) dem Dekel (18) und einer einstückig mit dem ersten (14) der beiden Seitenteile ausgeführten Verschlußplatte (20) gebildet ist, wobei die Durchlässe (24) in der Verschlußplatte (20) ausgebildet sind.

2. Gassack-Modul nach Anspruch 1, **dadurch gekennzeichnet, daß** die beiden Seitenteile (14, 16) einander auf der von dem Strömungskanal (22) abgewandten Seite des Gassacks (12) berühren, so daß das Gehäuse (10) dort verschlossen ist.

3. Gassack-Modul nach Anspruch 2, **dadurch gekennzeichnet, daß** die beiden Seitenteile (14, 16) einstückig miteinander ausgebildet sind und zwischen den beiden Seitenteilen (14, 16) auf der von dem Strömungskanal (22) abgewandten Seite des Gassacks (12) eine Reißlinie (34) vorgebildet ist.

4. Gassack-Modul nach Anspruch 2, **dadurch gekennzeichnet, daß** die beiden Seitenteile (14, 16) als separate Teile ausgeführt sind und auf der von dem Strömungskanal (22) abgewandten Seite des Gassacks (12) lösbar miteinander verbunden sind.

5. Gassack-Modul nach Anspruch 4, **dadurch gekennzeichnet, daß** die beiden Seitenteile (14, 16) auf der von dem Strömungskanal (22) abgewandten Seite des Gassacks (12) miteinander verrastet sind.

6. Gassack-Modul nach einem der Ansprüche 4 und 5, **dadurch gekennzeichnet, daß** die beiden Seitenteile (14, 16) aus Materialien unterschiedlicher Festigkeit bestehen.

7. Gassack-Modul nach einem der vorhergehenden Ansprüche, **dadurch gekennzeichnet, daß** an der Verschlußplatte (20) Vorsprünge (26) ausgebildet sind, die in Öffnungen (28) eingreifen, die im zweiten Seitenteil (16) ausgebildet sind.

8. Gassack-Modul nach Anspruch 7, **dadurch gekennzeichnet, daß** der Gassack (12) mit Laschen (48) versehen ist, in die die Vorsprünge (26) eingreifen.

9. Gassack-Modul nach einem der vorhergehenden Ansprüche, **dadurch gekennzeichnet, daß** an ersten Seitenteil (14) eine Fixierungsplatte (40) vorgesehen ist, die mittels einer Biegelinie (42) mit dem ersten Seitenteil (14) verbunden ist, sich parallel zu diesem ersten Seitenteil (14) erstreckt, mit einer Nut (44) zur Aufnahme einer Berandung des Gassacks (12) versehen ist und an ihrem von der Biegelinie (42) abgewandten Rand mit der Verschlußplatte (20) versehen ist.

10. Gassack-Modul nach einem der vorhergehenden Ansprüche, **dadurch gekennzeichnet, daß** das zweite Seitenteil (16), das nicht mit der Verschlußplatte (20) versehen ist, mit Verstärkungselementen (50, 52) versehen ist, die den Strömungskanal (22) verstärken.

11. Gassack-Modul nach einem der vorhergehenden Ansprüche, **dadurch gekennzeichnet, daß** das Gehäuse (10) aus Kunststoff besteht.

12. Gassack-Modul nach Anspruch 11, **dadurch gekennzeichnet, daß** der Kunststoff spritzgegossener oder gegossener Kunststoff ist.

13. Gassack-Modul nach Anspruch 11 oder 12, **dadurch gekennzeichnet, daß** das Gehäuse (10) ein einstückiges Formteil ohne ein geschlossenes Profil ist, wobei der Strömungskanal (22) durch Umbiegen und Verbinden von umgebogenen Abschnitten des Gehäuses (10) gebildet ist.

14. Gassack-Modul nach Anspruch 13, **dadurch gekennzeichnet, daß** die umgebogenen Abschnitte die Seitenteile (14, 16) sind, die über dic Verschlußplatte (20) auf einen konstanten Abstand zueinander gehalten sind.

15. Gassack-Modul nach Anspruch 14, **dadurch gekennzeichnet, daß** die Verschlußplatte (20) über eine Clip-Verbindung (26, 28) an demjenigen Seitenteil (16) befestigt ist, an den es nicht angeformt ist.

16. Verfahren zum Herstellen eines Gassack-Moduls nach einem der vorhergehenden Ansprüche, **gekennzeichnet durch** folgende Schritte:
a) das Gehäuse (10) wird aus Kunststoff so gespritzt oder gegossen, daß keine geschlossenen Profile im hergestellten gespritzten oder gegossenen Teil vorgesehen sind,
b) der gefaltete Gassack (12) wird in das offene Gehäuse (10) eingelegt,
c) das Gehäuse (10) wird an der dem strömungs Kanal (22) abgewandten Seite des Gassacks (12) geschlossen, wobei **durch** das Schließen auch der Strömungskanal (22) geschlossen wird, und
d) die **durch** das Schließen einander gegenüberliegenden Seitenteile (14, 16) werden miteinander so verbunden, daß sie auf konstanten Abstand gehalten sind.

17. Verfahren nach Anspruch 16, **dadurch gekennzeichnet, daß** durch Schritt c) auch eine Kammer zur Unterbringung des Gassacks (12) geschlossen wird.

18. Verfahren nach Anspruch 16 oder 17, **dadurch gekennzeichnet, daß** die Seitenteile (14, 16) im Schritt d) durch die Verschlußplatte (20) aneinander befestigt werden.

19. Verfahren nach Anspruch 18, **dadurch gekennzeichnet, daß** die Seitenteile (14, 16) durch den an einem der beiden Seitenteile (14,16) einstückig angeformten Deckel (18) miteinander verbunden sind.

## Claims

1. A gas bag module for a vehicle occupant restraint system, comprising an elongated housing (10) which consists of two side pieces (14, 16) connected to each other by means of a cover (18) and in which a flow channel (22) having passages (24) for compressed gas is provided, and comprising a gas bag (12) which can be transferred by means of the compressed gas from a folded position into an unfolded position and which is accommodated in the housing (10),
**characterized in that** the flow channel (22) is formed by the side pieces (14, 16) of the housing (10), by the cover (18) and by a closure plate (20) constructed in one piece with the first (14) of the two side pieces, the passages (24) being configured in the closure plate (20).

2. The gas bag module according to Claim 1, **characterized in that** the two side pieces (14, 16) touch each other on the side of the gas bag (12) facing away from the flow channel (22), so that the housing (10) is closed there.

3. The gas bag module according to Claim 2, **characterized in that** the two side pieces (14, 16) are constructed in one piece with each other and that between the two side pieces (14, 16) a tear line (34) is pre-formed on the side of the gas bag (12) facing away from the flow channel (22).

4. The gas bag module according to Claim 2, **characterized in that** the two side pieces (14, 16) are constructed as separate parts and are detachably connected with each other on the side of the gas bag (12) facing away from the flow channel (22).

5. The gas bag module according to Claim 4, **characterized in that** the two side pieces (14, 16) are locked with each other on the side of the gas bag (12) facing away from the flow channel (22).

6. The gas bag module according to any of Claims 4 and 5, **characterized in that** the two side pieces (14, 16) consist of materials of differing strength.

7. The gas bag module according to any of the preceding claims, **characterized in that** projections (26) are formed on the closure plate (20) and engage into openings (28) formed in the second side piece (16).

8. The gas bag module according to Claim 7, **characterized in that** the gas bag (12) is provided with tongues (48) into which the projections (26) engage.

9. The gas bag module according to any of the preceding claims, **characterized in that** provided on the first side piece (14) is a fixing plate (40) which is connected with the first side piece (14) by means of a bending line (42), extends parallel to this first side piece (14), is provided with a groove (44) to receive a rim of the gas bag (12), and is provided with the closure plate (20) on its edge facing away from the bending line (42).

10. The gas bag module according to any of the preceding claims, **characterized in that** the second side piece (16), which is not provided with the closure plate (20), is provided with reinforcement elements (50, 52) which reinforce the flow channel (22).

11. The gas bag module according to any of the preceding claims, **characterized in that** the housing (10) consists of plastic.

12. The gas bag module according to Claim 11, **characterized in that** the plastic is an injection-molded or molded plastic.

13. The gas bag module according to Claim 11 or 12, **characterized in that** the housing (10) is a one-piece shaped part without a closed profile, the flow channel (22) being formed by bending and connecting bent sections of the housing (10).

14. The gas bag module according to Claim 13, **characterized in that** the bent sections are the side pieces (14, 16) which are kept at a constant distance from each other by means of the closure plate (20).

15. The gas bag module according to Claim 14, **characterized in that** the closure plate (20) is fastened by a clip connection (26, 28) to that side piece (16) with which it is not formed integrally.

16. A method of producing a gas bag module according to any of the preceding claims, **characterized by** the following steps:
(a) the housing (10) is injection-molded or molded from plastic in such a way that no closed profiles are provided in the injection-molded or molded part as produced,
(b) the folded gas bag (12) is placed into the open housing (10),
(c) the housing (10) is closed on the side of the gas bag (12) facing away from the flow channel (22), the flow channel (22) being likewise closed by the closing action, and
(d) the side pieces (14, 16) lying opposite each other due to the closing action are connected to each other in such a way that they are kept at a constant distance.

17. The method according to Claim 16, **characterized in that** by step (c) a chamber for accommodating the gas bag (12) is likewise closed.

18. The method according to Claim 16 or 17, **characterized in that** in step (d) the side pieces (14, 16) are fastened to each other by the closure plate (20).

19. The method according to Claim 18, **characterized in that** the side pieces (14, 16) are connected to each other by the cover (18) formed integrally with one of the two side pieces (14, 16).

## Revendications

1. Module de coussin à gaz pour un système de retenue d'occupants d'un véhicule, comportant un boîtier (10) allongé qui est constitué par deux parties latérales (14, 16) reliées l'une à l'autre au moyen d'un couvercle (18) et dans lequel est prévu un canal d'écoulement (22) avec des passages (24) pour du gaz comprimé, et un coussin à gaz (12) qui peut être amené au moyen du gaz comprimé depuis une position repliée jusque dans une position déployée et qui est logé dans le boîtier (10),
**caractérisé en ce que** le canal d'écoulement (22) est formé par les parties latérales (14, 16) du boîtier (10), par le couvercle (18) et par une plaque de fermeture (20) réalisée d'un seul tenant avec la première (14) des deux parties latérales, les passages (24) étant réalisés dans la plaque de fermeture (20).

2. Module de coussin à gaz selon la revendication 1, **caractérisé en ce que** les deux parties latérales (14, 16) se touchent sur le côté du coussin à gaz (12) qui est détourné du canal d'écoulement (22) de sorte que le boîtier (10) est fermé à cet endroit.

3. Module de coussin à gaz selon la revendication 2, **caractérisé en ce que** les deux parties latérales (14, 16) sont réalisées d'une seul tenant l'une avec l'autre, et une ligne de déchirure (34) est préformée entre les deux parties latérales (14, 16), sur le côté du coussin à gaz (12) qui est détourné du canal d'écoulement (22).

4. Module de coussin à gaz selon la revendication 2, **caractérisé en ce que** les deux parties latérales (14, 16) sont réalisées sous forme de parties séparées et sont reliées l'une à l'autre sur le côté du coussin à gaz (12) qui est détourné du canal d'écoulement (22).

5. Module de coussin à gaz selon la revendication 4, **caractérisé en ce que** les deux parties latérales (14, 16) sont enclenchées l'une avec l'autre sur le côté du coussin à gaz (12) qui est détourné du canal d'écoulement (22).

6. Module de coussin à gaz selon l'une des revendications 4 et 5, **caractérisé en ce que** les deux parties latérales (14, 16) sont réalisées en des matériaux de solidité différente.

7. Module de coussin à gaz selon l'une des revendications précédentes, **caractérisé en ce que** sur la plaque de fermeture (20) sont réalisées des saillies (26) qui s'engagent dans des ouvertures (28) qui sont réalisées dans la deuxième partie latérale (16).

8. Module de coussin à gaz selon la revendication 7, **caractérisé en ce que** le coussin à gaz (12) est pourvu de pattes (48) dans lesquelles s'engagent les saillies (26).

9. Module de coussin à gaz selon l'une des revendications précédentes, **caractérisé en ce que** sur la première partie latérale (14) est prévue une plaque de fixation (40) qui est reliée à la première partie latérale (16) par une ligne de flexion (42), s'étend parallèlement à cette première partie latérale (14), est pourvue d'une gorge (44) pour recevoir un bord du coussin à gaz (12) et est pourvue de la plaque de fermeture (20) sur son bord détourné de la ligne de flexion (42).

10. Module de coussin à gaz selon l'une des revendications précédentes, **caractérisé en ce que** la deuxième partie latérale (16), qui n'est pas pourvue de la plaque de fermeture (20), est pourvue d'éléments de renforcement (50, 52) qui renforcent le canal d'écoulement (22).

11. Module de coussin à gaz selon l'une des revendications précédentes, **caractérisé en ce que** le boîtier (10) est réalisé en matière plastique.

12. Module de coussin à gaz selon la revendication 11, **caractérisé en ce que** la matière plastique est de la matière plastique moulée par injection ou moulée.

13. Module de coussin à gaz selon la revendication 11 ou 12, **caractérisé en ce que** le boîtier (10) est une pièce moulée d'un seul tenant sans profil fermé, le canal d'écoulement (22) étant formé en repliant et en reliant des tronçons repliés du boîtier (10).

14. Module de coussin à gaz selon la revendication 13, **caractérisé en ce que** les tronçons repliés sont les parties latérales (14, 16) qui sont maintenues à une distance constante l'une par rapport à l'autre par l'intermédiaire de la plaque de fermeture (20).

15. Module de coussin à gaz selon la revendication 14, **caractérisé en ce que** la plaque de fermeture (20) est fixée par une liaison par agrafes (26, 28) sur la partie latérale (16) sur laquelle le module n'est pas formé.

16. Procédé de fabrication d'un module de coussin à gaz selon l'une des revendications précédentes, **caractérisé par** les étapes suivantes :
a) le boîtier (10) est injecté ou moulé en matière plastique de telle sorte qu'aucun profil fermé n'est prévu dans la partie réalisée par injection ou par moulage,
b) le coussin à gaz (12) plié est inséré dans le boîtier (10) ouvert,
c) le boîtier (10) est fermé sur le côté du coussin à gaz (12) qui est détourné du canal d'écoulement (22), la fermeture provoquant aussi la fermeture du canal d'écoulement, et
d) les parties latérales (14, 16) opposées l'une par rapport à l'autre sont reliées l'une à l'autre de telle sorte qu'elles sont maintenues à une distance constante.

17. Procédé selon la revendication 16, **caractérisé en ce que** par l'étape c) une chambre est fermée pour loger le coussin à gaz (12).

18. Procédé selon la revendication 16 ou 17, **caractérisé en ce que** les parties latérales (14, 16) sont fixées l'une à l'autre par la plaque de fermeture (20) au cours de l'étape d).

19. Procédé selon la revendication 18, **caractérisé en ce que** les parties latérales (14, 16) sont reliées l'une à l'autre par le couvercle (18) formé d'un seul tenant sur l'une des deux parties latérales (14, 16).
